(19) **Europäisches Patentamt**

**European Patent Office**

**Office européen des brevets**

(11) Publication number: **0 526 477 B1**

## (12) EUROPEAN PATENT SPECIFICATION

(45) Date of publication of patent specification: **14.12.94**

(51) Int. Cl.5: **C09K 5/04**

(21) Application number: **91907114.2**

(22) Date of filing: **21.03.91**

(86) International application number:
**PCT/US91/01803**

(87) International publication number:
**WO 91/16390 (31.10.91 91/25)**

(54) **HALOCARBON BLENDS.**

(30) Priority: **25.04.90 US 520254**

(43) Date of publication of application:
**10.02.93 Bulletin 93/06**

(45) Publication of the grant of the patent:
**14.12.94 Bulletin 94/50**

(84) Designated Contracting States:
**DE FR GB IT NL**

(56) References cited:
| | |
|---|---|
| **EP-A- 0 345 580** | **EP-A- 0 384 371** |
| **WO-A-91/09089** | **JP-A- 1 153 786** |
| **JP-A-63 308 084** | **US-A- 3 819 493** |
| **US-A- 4 198 313** | **US-A- 4 530 773** |
| **US-A- 4 810 403** | **US-A- 4 945 119** |
| **US-A- 4 957 652** | **US-A- 4 972 003** |

**Didion et- "Future possibilities for non-atcomopic mixtures" Proceedings CFC Seminar home 30-31 May 1988 pp 102-125**

(73) Proprietor: **E.I. DU PONT DE NEMOURS AND COMPANY**
**1007 Market Street**
**Wilmington Delaware 19898 (US)**

(72) Inventor: **BIVENS, Donald, Bernard**
**210 West Locust Lane**
**Kennett Square, PA 19348 (US)**
Inventor: **LUNGER, Brooks, Shawn**
**3815 Capital Trail**
**Wilmington, DE 19808 (US)**

(74) Representative: **Woodcraft, David Charles et al**
**High Holborn House**
**52/54 High Holborn**
**London WC1V 6SE (GB)**

Rank Xerox (UK) Business Services
(3. 10/3.09/3.3.3)

EP 0 526 477 B1

**Description**

This invention relates to specific ternary, quaternary and pentanary halocarbon blends as described herein. Such blends are useful as refrigerants, heat transfer media, fire extinguishing agents, gaseous dielectrics, expansion agents, aerosol propellants and power cycle working fluids. These blends are potentially environmentally safe substitutes for dichlorodifluoromethane (CFC-12).

In refrigeration applications, and more specifically, in automobile air conditioning systems, refrigerant may be released to the atmosphere through leaks, such as through shaft seals, hose connections, solder joints, etc. Additionally, refrigerant may also be released to the atmosphere during equipment repair and equipment damage, such as automobile accidents.

Worldwide concern about stratospheric ozone depletion has resulted in a concerted search for alternative compounds which have lower ozone depletion potentials than CFC-12 which is the most widely used refrigerant. Its future use is expected to be reduced significantly because of its relatively high ozone depletion potential.

Most currently produced commercial refrigerants are either pure fluids or azeotropes. Many of these refrigerants have ozone depletion potentials.

Some nonazeotropic mixtures may also be used as refrigerants but they have the disadvantage of fractionating when a portion of the refrigerant charge is leaked or discharged to the atmosphere. Should these nonazeotropic mixtures contain a flammable component, they could either become flammable themselves or release a flammable component to the atmosphere. Refrigeration equipment operation could be affected adversely because of compositional and vapor pressure changes.

What is needed, therefore, are substitute refrigerant blends which maintain refrigerant properties over wide compositional ranges, and also have significantly reduced ozone depletion potentials.

According to the present invention there is provided an azeotrope-like blend consisting essentially of 40 to 60 weight percent of 1,1,1,2-tetrafluoroethane (HFC-134a), 2 to 40 weight percent of 1,1-difluoroethane (HFC-152a) and 2 to 40 weight percent of a halocarbon selected from the group consisting of:

2-chloro-1,1,1,2-tetrafluoroethane (HCFC-124)
2-chloro-1,1,2,2-tetrafluoroethane (HCFC-124a)
monohydroperfluoropropane and mixtures thereof.

The component proportions being chosen such that the resulting blends have vapor pressures substantially equal to the vapor pressure of dichlorodifluoromethane (CFC-12), over the temperature range of about 0°C to 100°C. All of the aforedescribed azeotrope-like blends have substantially lower ozone depletion potentials than CFC-12.

The novel azeotrope-like blends may be used to produce refrigeration by condensing the blend and thereafter evaporating the condensate in the vicinity of a body to be cooled.

The novel azeotrope-like blends may also be used to produce heat by condensing the blend in the vicinity of the body to be heated and thereafter evaporating the condensate.

The novel azeotrope-like blends may also be used as heat transfer media, fire extinguishing agents, gaseous dielectrics, expansion agents, aerosol propellants and power cycle working fluids.

The use of azeotrope-like blends minimizes the problem of component fractionation and handling in system operations because azeotrope-like blends behave essentially as single substances. Many of the novel, azeotrope-like blends also offer the advantage of being nonflammable.

By "azeotrope-like blend" is meant an admixture of three or more compounds, which admixture behaves essentially as a single compound, in that the vapor pressure of the admixture remains substantially unchanged during evaporation of about 50 weight percent of the original admixture. In other words, the residual admixture after substantial evaporation maintains essentially the same vapor pressure as the original admixture, i.e., the admixture evaporates without substantial vapor pressure change.

By "vapor pressure of the admixture remaining substantially unchanged during evaporation of about 50 weight percent of the original admixture" is meant that the vapor pressure during about 50 weight percent evaporation does not decline more than 10% from the vapor pressure of the starting admixture.

By "refrigerant" is meant the substance which undergoes physical change in heat transfer applications.

By "ozone depletion potential" is meant the ratio of the calculated ozone depletion in the stratosphere which results from the emission of a compound compared to the ozone depletion potential which results from the same emission rate as trichlorofluoromethane (CFC-11) which is set at 1.0. A method of calculating ozone depletion potential is described in: "The Relative Efficiency of a Number of Halocarbons for Destroying Stratospheric Ozone", by D. J. Wuebbles, Lawrence Livermore Laboratory Report UCID-18924, January, 1981 and "Chlorofluorocarbon Emission Scenarios: Potential Impact on Stratospheric Ozone", by D. J. Wuebbles, Journal Geophysics Research, 88, 1433-1443, 1983.

By "nonflammable", is meant, a gas mixture in air will not burn when subjected to a spark igniter, as described in "Limits of Flammability of Gases and Vapours", Bulletin 503, H. F. Coward et al., U.S. Bureau of Mines, Washington, D.C., 1952.

By "substantially equal to the vapor pressure of dichlorodifluoromethane (CFC-12)" is meant, a vapor pressure which is about ±25 percent of the vapor pressure of dichlorodifluoromethane at the same temperature over the temperature range of 0 °C to 100 °C. The vapor pressure of dichlorodifluoromethane is described in the "Handbook of Chemistry and Physics", 50th Ed., page D-163.

By "substantially lower ozone depletion potential than the ozone depletion potential of dichlorodifluoromethane" is meant an ozone depletion potential about fifty percent less than the ozone depletion potential of dichlorodifluoromethane.

This invention provides azeotrope-like blends which have vapor pressure/temperature relationships substantially equal to the vapor pressure of dichlorodifluoromethane (CFC-12). Additionally, the azeotrope-like blends of the instant invention retain a close match to the CFC-12 vapor pressure/temperature relationship, even after substantial evaporation losses of about 50 weight percent of the original charge. A vapor pressure/temperature relationship similar to that of CFC-12 is particularly desirable because existing refrigeration equipment, originally designed for CFC-12 use, can also be used with the azeotrope-like blends described herein, with little or no modification. The vapor pressure of the admixtures of the instant invention remain substantially unchanged during evaporation of about 50 weight percent of the original admixture.

The azeotrope-like blends of the instant invention comprise admixtures of effective amounts of 1,1,1,2-tetrafluoroethane ($CF_3$-$CH_2F$, boiling point = -26.5 °C) and 1,1-difluoroethane ($CF_2H$-$CH_3$, boiling point = -24.7 °C) and a halocarbon selected from the group consisting of 2-chloro-1,1,1,2-tetrafluoroethane ($CF_3$-CHClF, boiling point = -12 °C), 2-chloro-1,1,2,2-tetrafluoroethane ($CF_2H$-$CF_2Cl$, boiling point = -10.2 °C), 1-hydroperfluoropropane ($CF_3$-$CF_2$-$CHF_2$, boiling point = -17 °C), and 2-hydroperfluoropropane ($CF_3$-CHF-$CF_3$, boiling point = -18 °C),

The present invention also provides azeotrope-like blends, whose ozone depletion potentials are significantly lower than that of dichlorodifluoromethane.

The present invention also provides a series of azeotrope-like blends, many of which are nonflammable.

The azeotrope-like blends of the instant invention can be prepared by any convenient method including mixing or combining the desired component amounts. A preferred method is to weigh the desired component amounts and thereafter combine them in an appropriate container.

The azeotrope-like blends described in this invention may have the following preferred compositions: about 40 to 60 weight percent 1,1,1,2-tetrafluoroethane, about 2 to 40 weight percent 1,2-difluoroethane and about 2 to 40 weight percent of a halocarbon selected from the group consisting of 2-chloro-1,1,1,2-tetrafluoroethane (HCFC-124), 2-chloro-1,1,2,2-tetrafluoroethane (HCFC-124a), and 1-hydroperfluoropropane (HFC-227ca), 2-hydroperfluoropropane (HFC-227ea),

The azeotrope-like blends described in this invention may have the following more preferred compositions:

- About 50 weight percent
  1,1,1,2-tetrafluoroethane, about 25 weight percent 1,1-difluoroethane and about 25 weight percent 2-chloro-1,1,1,2-tetrafluoroethane.
- About 50 weight percent
  1,1,1,2-tetrafluoroethane, about 25 weight percent 1,1-difluoroethane and about 25 weight percent 2-chloro-1,1,2,2-tetrafluoroethane.
- About 50 weight percent
  1,1,1,2-tetrafluoroethane, about 25 weight percent 1,1-difluoroethane and about 25 weight percent 1-hydroperfluoropropane.
- About 50 weight percent
  1,1,1,2-tetrafluoroethane, about 25 weight percent 1,1-difluoroethane and about 25 weight percent 2-hydroperfluoropropane.
- About 50 weight percent
  1,1,1,2-tetrafluoroethane, about 25 weight percent 1,1-difluoroethane, about 12.5 weight percent 2-chloro-1,1,1,2-tetrafluoroethane and about 12.5 weight percent 2-hydroperfluoropropane.

The azeotrope-like blends described in this invention may have the following most preferred composition: about 55 weight percent 1,1,1,2-tetrafluoroethane, about 20 weight percent 1,1-difluoroethane and about 25 weight percent 2-chloro-1,1,1,2-tetrafluoroethane.

Specific examples of the present invention will now be set forth. Unless otherwise stated, all percentages are by weight. It is to be understood that these examples are merely illustrative and are in no way to be interpreted as limiting the scope of this invention.

| EXAMPLE 1 | | | | |
|---|---|---|---|---|
| Refrigerant Blends | | Vapor Pressure At 25 °C, psia | | |
| | | Amount Evaporated | | |
| | | 0 wt% | 50 wt% | % Change |
| 1. CFC-12 | | 94.5 | 94.5 | 0.0 |
| 2. (40% + 20% + 40%) HCFC-22/HFC-152a/CFC-114 | | 99.5 | 89.5 | 10.0 |
| 3. (36% + 24% + 40%) HCFC-22/HFC-152a/HCFC-124 | | 95.1 | 86.0 | 9.6 |
| 4. (50% + 25% + 25%) HFC-134a/HFC-152a/HCFC-124 | | 86.4 | 84.2 | 2.5 |
| 5. (50% + 25% + 25%) HFC-134a/HFC-152a/HCFC-124a | | 85.1 | 83.2 | 2.2 |
| 6. (50% + 25% + 25%) HFC-134a/HFC-152a/HFC-227ca | | (*) | | |
| 7. (50% + 25% + 12.5% + 12.5%) HFC-134a/HFC-152a/HCFC-124/HFC-227ea | | 89.1 | 87.6 | 1.5 |
| (*) The azeotrope-like blend described here is expected to perform identically to the blend below it, which contains the HFC-227ea isomer. HCFC-22 = chlorodifluoromethane | | | | |

Example 1 demonstrates that all of the azeotrope-like blends of the instant invention exhibit very small vapor pressure changes during 50 weight percent evaporation of the total blend. The vapor pressure versus leak behavior of these blends approximates very closely that of neat CFC-12. Vapor pressure performance, after partial blend evaporation, indicates that all of the aforementioned blends would essentially maintain their vapor pressures, even after 50 percent of the blend was lost.

This Example also demonstrates that the azeotrope-like blends described in the instant invention, which contain both HFC-134a and HFC-152a, exhibit lower vapor pressure changes than do the ternary blends described in U.S. Patent No. 4,810,403, which contain both HCFC-22 and HFC-152a. The blends of the instant invention are, surprisingly, more azeotrope-like and therefore better refrigerant candidates than those cited in the aforementioned patent.

## EXAMPLE 2

| Refrigerant Blends | Refrigerant Performance (*) | | | | |
|---|---|---|---|---|---|
| | (e) COP | Capacity BTU/MIN | Comp.Exit P, PSIA | T°F | (a) ΔT,°F |
| 1. CFC-12 | 1.79 | 125.2 | 388 | 221 | -- |
| 2. HFC-134a | 1.50 | 106.0 | 444 | 213 | -- |
| 3. (40%+20%+40%) HCFC-22/HFC-152a/ CFC-114 | 1.78 | 121.9 | 405 | 231 | 7.7 |
| 4. (36%+24%+40%) HCFC-22/HFC-152a/ HCFC-124 | 1.90 | 130.8 | 404 | 240 | 4.2 |
| 5. (50%+25%+25%) HFC-134a/HFC-152a/ HCFC-124 | 1.77 | 111.4 | 388 | 221 | 1.3 |
| 6. (50%+25%+25%) HFC-134a/HFC-152a/ HCFC-124a | (b) | | | | |
| 7. (50%+25%+25%) HFC-134A/HFC-152A/ HFC-227ca | (c) | | | | |
| 8. (50%+25%+25%) HFC-134a/HFC-152a/ HFC-227ea | 1.36 | 88.1 | 399 | 214 | 0.4 |
| 9. (50%+25% +12.5%+12.5%) HFC-134a/HFC-152a/ HCFC-124/HFC-227ea | 1.58 | 101.4 | 398 | 219 | 0.8 |

(*) Refrigeration test conditions were: Condenser temperature = 190°F; Evaporator temperature = 40°F; Superheat = 10°F; Subcooling = 10°F; Compressor displacement = 3.5 ft$^3$/min.

(a) ΔT is the temperature differential between dew point and bubble point temperatures at the condenser.

(b) The azeotrope-like blend described here is expected to perform identically to the blend which contains the HCFC-124 isomer.

(c) The azeotrope-like blend described here is expected to perform identically to the blend which contains the HFC-227ea isomer.

(e) COP is Coefficient of Performance, a measure of energy efficiency.

These data suggest that the refrigeration performance of the multi-component, azeotrope-like blends, which contain HFC-134a, compare quite favorably with CFC-12, and appear to be considerably better than HFC-134a, the proposed automotive replacement refrigerant, with respect to compressor discharge pressure.

Example 2 also demonstrates that the azeotrope-like blends described in the instant invention, which contain both HFC-134a and HFC-152a, exhibit lower condenser temperature differentials than do the ternary blends described in U.S. Patent No. 4,810,403, which contain both HCFC-22 and HFC-152a. Again, these data demonstrate that the blends of the instant invention are more azeotrope-like and therefore better refrigerant candidates than those cited in the aforementioned patent.

## EXAMPLE 3

### AUTOMOTIVE AIR CONDITIONER WIND TUNNEL TESTS

### Performance Comparison Between HFC-134a and CFC-12

#### Interior Temperature

| | | |
|---|---|---|
| Pulldown | Slightly slower | |
| Normal Speeds | + 1 to 2°F | |
| Idle | + 4 to 6°F | |
| Compressor Suction: | Pressure, psig | Temperature, °F |
| Normal Speeds | Same | + 2 to 4 |
| Idle | + 10 to 15 | + 5 to 10 |
| Compressor Discharge: | Pressure, psig | Temperature, °F |
| Normal Speeds | + 20 to 25 | -13 to -15 |
| Idle | + 75 to 80 | -8 to -10 |

### Performance Comparison Between HFC-134a/HFC-152a/HCFC-124(50.0+25.0+25.0) and CFC-12

#### Interior Temperature

| | | |
|---|---|---|
| Pulldown | Same | |
| Normal Speeds | + 1.2°F | |
| Idle | + 2.6°F | |
| Compressor Suction: | Pressure, psig | Temperature, °F |
| Normal Speeds | Same | - 5 |
| Idle | Same | - 5 |
| Compressor Discharge: | Pressure, psig | Temperature, °F |
| Normal Speeds | - 9 | - 13 |
| Idle | - 5 | - 14 |

These data demonstrate that the azeotrope-like blend cited above performs surprising better in automotive air conditioners than the proposed substitute refrigerant, 1,1,1,2-tetrafluoroethane (HFC-134a). The ternary blend provides unexpectedly better cooling, and most importantly, has compressor discharge pressures which are 30 to 85 psig lower than HFC-134a. The higher compressor discharge pressures associated with HFC-134a necessitate expensive equipment redesign, whereas, by using the azeotrope-like blend cited, no equipment modification would be required for pressure considerations.

| EXAMPLE-4 | |
|---|---|
| Refrigerant Blends | Ozone Depletion Potentials |
| 1. CFC-12 | 1.00 |
| 2. (40% + 20% + 40%) HCFC-22/HFC-152a/CFC-114 | 0.40 |
| 3. (36% + 24% + 40% HCFC-22/HFC-152a/HCFC-124 | 0.09 |
| 4. (50% + 25% + 25%) HFC-134a/HFC-152a/HCFC-124 | 0.05 |
| 5. (50% + 25% + 25%) HFC-134a/HFC-152a/HCFC-124a | 0.05 |
| 6. (50% + 25% + 25%) HFC-134a/HFC-152a/HFC-227ca | 0.00 |
| 7. (50% + 25% + 25%) HFC-134a/HFC-152a/HFC-227ea | 0.00 |
| 8. (50% + 25% + 12.5% + 12.5%) HFC-134a/HFC-152a/HCFC-124/HFC-227ea | 0.03 |

These data demonstrate that all of the azeotrope-like blends of the instant invention exhibit substantially lower ozone depletion potentials than dichlorodifluoromethane (CFC-12).

Example 4 also demonstrates that the azeotrope-like blends described in this invention, which contain both HFC-134a and HFC-152a, also exhibit lower ozone depletion potentials than do the ternary blends described in U.S. Patent No. 4,810,403, which contain both HCFC-22 and HFC-152a.

## Claims

1. An azeotrope-like blend consisting essentially of 40 to 60 weight percent of 1,1,1,2-tetrafluoroethane, 2 to 40 weight percent of 1,1-difluoroethane and 2 to 40 weight percent of a halocarbon selected from the group consisting of:
   2-chloro-1,1,1,2-tetrafluoroethane,
   2-chloro-1,1,2,2-tetrafluoroethane,
   monohydroperfluoropropane and mixtures thereof.

2. The azeotrope-like blend of Claim 1 wherein the halocarbon is 2-chloro-1,1,1,2-tetrafluoroethane.

3. The azeotrope-like blend of Claim 1 wherein the halocarbon is 2-chloro-1,1,2,2-tetrafluoroethane.

4. The azeotrope-like blend of Claim 1 wherein the halocarbon is monohydroperfluoropropane.

5. The azeotrope-like blend of Claim 4 wherein the monohydroperfluoropropane is 2-hydroperfluoropropane.

6. The azeotrope-like blend of Claim 1 wherein the halocarbon is an admixture of 2-chloro-1,1,1,2-tetrafluoroethane and 2-hydroperfluoropropane.

7. The azeotrope-like blend of Claim 1 wherein about 50 weight percent 1,1,1,2-tetrafluoroethane, about 25 weight percent 1,1-difluoroethane and about 25 weight percent 2-chloro-1,1,1,2-tetrafluoroethane are present.

8. the azeotrope-like blend of Claim 1 wherein about 55 weight percent 1,1,1,2-tetrafluoroethane, about 20 weight percent 1,1-difluoroethane and about 25 weight percent 2-chloro-1,1,1,2-tetrafluoroethane are present.

9. The azeotrope-like blend of Claim 1 wherein about 50 weight percent 1,1,1,2-tetrafluoroethane, about 25 weight percent 1,1,difluoroethane and about 25 weight percent 2-chloro-1,1,2,2-tetrafluoroethane are present.

10. The azeotrope-like blend of Claim 1 wherein 50 weight percent 1,1,1,2-tetrafluoroethane, about 25 weight percent 1,1-difluoroethane and about 25 weight percent monohydroperfluoropropane are present.

11. The azeotrope-like blend of Claim 10 wherein the monohydroperfluoropropane is 2-hydroperfluoropropane.

**12.** The azeotrope-like blend of Claim 1, wherein about 50 weight percent 1,1,1,2-tetrafluoroethane, about 25 weight percent 1,1,-difluoroethane, about 12.5 weight percent 2-chloro-1,1,1,2-tetrafluoroethane and about 12.5 weight percent 2-hydroperfluoropropane are present.

**13.** A method for producing cooling which comprises evaporating the blend of any one of claims 1 to 12 in the vicinity of a body to be cooled.

**14.** A method for producing heating which comprises condensing the blend of any one of claims 1 to 12 in the vicinity of the body to be cooled.

**Patentansprüche**

**1.** Azeotropartige Mischung, bestehend im wesentlichen aus 40 bis 60 Gew.-% 1,1,1,2,-Tetrafluorethan, 2 bis 40 Gew.-% 1,1-Difluorethan und 2 bis 40 Gew.-% eines Kohlenwasserstoffes, ausgewählt aus der Gruppe, bestehend aus
2-Chlor-1,1,1,2-tetrafluorethan,
2-Chlor-1,1,2,2-tetrafluorethan,
Monohydroperfluorpropan und aus Gemischen davon.

**2.** Azeotropartige Mischung nach Anspruch 1, worin der Halogenkohlenstoff 2-Chlor-1,1,1,2-tetrafluorethan ist.

**3.** Azeotropartige Mischung nach Anspruch 1, worin der Halogenkohlenstoff 2-Chlor-1,1,2,2-tetrafluorethan ist.

**4.** Azeotropartige Mischung nach Anspruch 1, worin der Halogenkohlenstoff Monohydroperfluorpropan ist.

**5.** Azeotropartige Mischung nach Anspruch 4, worin das Monohydroperfluorpropan 2-Hydroperfluorpropan ist.

**6.** Azeotropartige Mischung nach Anspruch 1, worin der Halogenkohlenstoff ein Gemisch von 2-Chlor-1,1,1,2-tetrafluorethan und 2-Hydroperfluorpropan ist.

**7.** Azeotropartige Mischung nach Anspruch 1, worin etwa 50 Gew.-% 1,1,1,2-Tetrafluorethan, etwa 25 Gew.-% 1,1-Difluorethan und etwa 25 Gew.-% 2-Chlor-1,1,1,2-tetrafluorethan vorhanden sind.

**8.** Azeotropartige Mischung nach Anspruch 1, worin etwa 55 Gew.-% 1,1,1,2-Tetrafluorethan, etwa 20 Gew.-% 1,1-Difluorethan und etwa 25 Gew.-% 2-Chlor-1,1,1,2-tetrafluorethan vorhanden sind.

**9.** Azeotropartige Mischung nach Anspruch 1, worin etwa 50 Gew.-% 1,1,1,2-Tetrafluorethan, etwa 25 Gew.-% 1,1-Difluorethan und etwa 25 Gew.-% 2-Chlor-1,1,2,2-tetrafluorethan vorhanden sind.

**10.** Azeotropartige Mischung nach Anspruch 1, worin 50 Gew.-% 1,1,1,2-Tetrafluorethan, etwa 25 Gew.-% 1,1-Difluorethan und etwa 25 Gew.-% Monohydroperfluorpropan vorhanden sind.

**11.** Azeotropartige Mischung nach Anspruch 10, worin das Monohydroperfluorpropan 2-Hydroperfluorpropan ist.

**12.** Azeotropartige Mischung nach Anspruch 1, worin etwa 50 Gew.-% 1,1,1,2-Tetrafluorethan, etwa 25 Gew.-% 1,1-Difluorethan, etwa 12,5 Gew.-% 2-Chlor-1,1,1,2-tetrafluorethan und etwa 12,5 Gew.-% 2-Hydroperfluorpropan vorhanden sind.

**13.** Verfahren zur Erzeugung von Kälte, welches das Verdampfen der Mischung nach einem der Ansprüche 1 bis 12 in der Nähe eines zu kühlenden Körpers umfaßt.

**14.** Verfahren zur Erzeugung von Wärme, welches die Kondensation der Mischung nach einem der Ansprüche 1 bis 12 in der Nähe des gekühlten Körpers umfaßt.

**Revendications**

1. Mélange semblable à un azéotrope, essentiellement constitué de 40 à 60 % en poids de 1,1,1,2-tétrafluoroéthane, de 2 à 40 % en poids de 1,1-difluoroéthane et de 2 à 40 % en poids d'un halogénocarbone choisi dans le groupe constitué du :
   2-chloro-1,1,1,2-tétrafluoroéthane,
   2-chloro-1,1,2,2-tétrafluoroéthane,
   monohydroperfluoropropane et des mélanges de ceux-ci.

2. Mélange semblable à un azéotrope selon la revendication 1, dans lequel l'halogénocarbone est le 2-chloro-1,1,1,2-tétrafluoroéthane.

3. Mélange semblable à un azéotrope selon la revendication 1, dans lequel l'halogénocarbone est le 2-chloro-1,1,2,2-tétrafluoroéthane.

4. Mélange semblable à un azéotrope selon la revendication 1, dans lequel l'halogénocarbone est le monohydroperfluoropropane.

5. Mélange semblable à un azéotrope selon la revendication 4, dans lequel le monohydroperfluoropropane est le 2-hydroperfluoropropane.

6. Mélange semblable à un azéotrope selon la revendication 1, dans lequel l'halogénocarbone est un mélange de 2-chloro-1,1,1,2-tétrafluoroéthane et de 2-hydroperfluoropropane.

7. Mélange semblable à un azéotrope selon la revendication 1, dans lequel environ 50 % en poids de 1,1,1,2-tétrafluoroéthane, environ 25 % en poids de 1,1-difluoroéthane et environ 25 % en poids de 2-chloro-1,1,1,2-tétrafluoroéthane sont présents.

8. Mélange semblable à un azéotrope selon la revendication 1, dans lequel environ 55 % en poids de 1,1,1,2-tétrafluoroéthane, environ 20 % en poids de 1,1-difluoroéthane et environ 25 % en poids de 2-chloro-1,1,1,2-tétrafluoroéthane sont présents.

9. Mélange semblable à un azéotrope selon la revendication 1, dans lequel environ 50 % en poids de 1,1,1,2-tétrafluoroéthane, environ 25 % en poids de 1,1-difluoroéthane et environ 25 % en poids de 2-chloro-1,1,2,2-tétrafluoroéthane sont présents.

10. Mélange semblable à un azéotrope selon la revendication 1, dans lequel 50 % en poids de 1,1,1,2-tétrafluoroéthane, environ 25 % en poids de 1,1-difluoroéthane et environ 25 % en poids de monohydroperfluoropropane sont présents.

11. Mélange semblable à un azéotrope selon la revendication 10, dans lequel le monohydroperfluoropropane est le 2-hydroperfluoropropane.

12. Mélange semblable à un azéotrope selon la revendication 1, dans lequel environ 50 % en poids de 1,1,1,2-tétrafluoroéthane, environ 25 % en poids de 1,1-difluoroéthane, environ 12,5 % en poids de 2-chloro-1,1,1,2-tétrafluoroéthane et environ 12,5 % en poids de 2-hydroperfluoropropane sont présents.

13. Procédé pour produire un refroidissement, qui comprend l'évaporation du mélange selon l'une quelconque des revendications 1 à 12 dans le voisinage d'un corps à refroidir.

14. Procédé pour produire un échauffement, qui comprend la condensation du mélange selon l'une quelconque des revendications 1 à 12 dans le voisinage d'un corps à refroidir.